# EUROPEAN PATENT APPLICATION

(11) **EP 4 241 980 A1**
(43) Date of publication of application: **13.09.2023**
(21) Application number: 22167611.7
(22) Date of filing: 11.04.2022
(51) Int. Cl.: B32B 5/02, B32B 5/08, B32B 7/12, B32B 7/14, B32B 27/08, B32B 27/12, B32B 27/30, B32B 27/40

(54) **ELASTIC WATERPROOF FABRIC**

(30) Priority: 08.03.2022 TW 111108358
(71) Applicant: Taiwan Chin Co., Ltd., Taichung City 429007 (TW); Huang, Po-Shih, Taichung City 429007 (TW); Huang, Chuan-Yu, Taichung City 429007 (TW)
(72) Inventor: HUANG, Po-Shih, Taichung City 429007 (TW); HUANG, Chuan-Yu, Taichung City 429007 (TW)
(74) Representative: Straus, Alexander

(57) **Abstract**

An elastic waterproof fabric includes an elastic cloth layer, an ethyl carbamate layer, and a polytetrafluoroethylene layer sandwiched between the polyurethane ethyl carbamate layer and the elastic cloth layer. The elastic cloth layer is composed of main yarn and an elastic yarn. The elastic yarn is selectively composed of spandex or polytrimethylene terephthalate PTT+polyethylene terephthalate PET or polybutylene terephthalate PBT+polyethylene terephthalate PET or polypropylene terephthalate + cationic dyeable polybutylene terephthalate.

## Description

### BACKGROUND OF THE INVENTION

### 1. Field of the Invention

The present invention relates to functional fabrics, especially an elastic waterproof fabric.

### 2. Description of the Related Art

At present, most of the waterproof and breathable fabrics use a polytetrafluoroethylene layer as the main structure of the waterproof and breathable fabric. The material is arranged on the cloth, and the material itself is not sticky and porous to achieve the effect of waterproof and moisture permeability. However, pure polytetrafluoroethylene itself is not elastic, so this type of functional fabric is not elastic. Moreover, polytetrafluoroethylene itself is not easy to fit, and it is not resistant to washing, and it is easy to fall off and cause the waterproof effect to disappear. Therefore, it also greatly limits the applicable scope of this type of functional fabric.

### SUMMARY OF THE INVENTION

The present invention has been accomplished under the circumstances in view. It is the main object of the present invention to provide an elastic waterproof fabric, which not only has the function of waterproof and moisture permeability, but also has stretchable elasticity at the same time.

To achieve this and other objects of the present invention, the elastic waterproof fabric comprises an elastic cloth layer, an ethyl carbamate layer, and a polytetrafluoroethylene layer sandwiched between the polyurethane ethyl carbamate layer and the elastic cloth layer. The elastic cloth layer is composed of main yarn and an elastic yarn. The elastic yarn is selectively composed of spandex or polytrimethylene terephthalate PTT+polyethylene terephthalate PET or polybutylene terephthalate PBT+polyethylene terephthalate PET or polypropylene terephthalate + cationic dyeable polybutylene terephthalate. The weight percentage of the elastic yarn in the elastic cloth layer is 35∼85%.

Preferably, the main yarn is composed of Poly, Nylon, Poly+Cotton, Nylon+poly.

Preferably, the elastic cloth layer and the polytetrafluoroethylene layer are combined in a lamination manner.

Preferably, the polytetrafluoroethylene layer and the polyurethane ethyl carbamate layer are combined in a lamination manner.

It can be seen from the above structure that the elastic waterproof fabric of the present invention can not only provide the function of waterproof and moisture permeability, but also make the elastic waterproof fabric have a certain degree of extensibility, so that the possible application range of the material can be further expanded.

The detailed structure, features, assembling or using methods provided by the present invention will be described in the detailed description of the following preferred embodiment. However, those with ordinary knowledge in the field of the present invention should be able to understand that this detailed description and the specific embodiments enumerated for implementing the present invention are only used to illustrate the present invention, and are not intended to limit the scope of the patent application of the present invention.

### BRIEF DESCRIPTION OF THE DRAWINGS

FIG. 1 is an exploded view of an elastic waterproof fabric in accordance with the present invention.
FIG. 2 is a schematic sectional view of the elastic waterproof fabric in accordance with the present invention.

### DETAILED DESCRIPTION OF THE INVENTION

The applicant first explains that in this specification, including the preferred embodiment described below and the claims of the scope of the patent application, the terms related to the directionality are all based on the directions in the drawings. Next, in the preferred embodiment and drawings to be introduced below, the same element numbers represent the same or similar elements or their structural features.

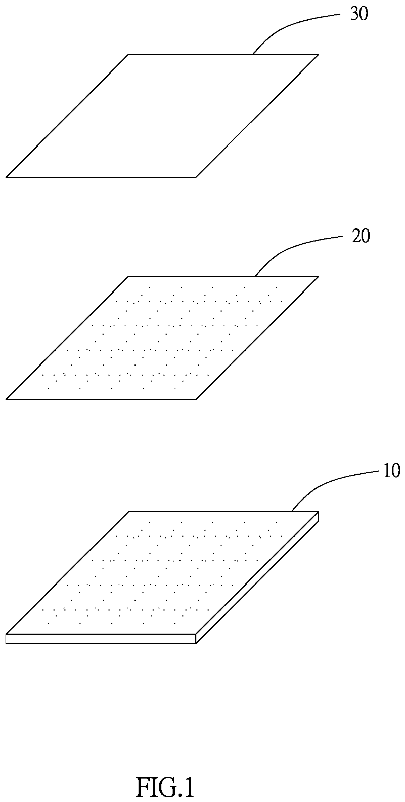

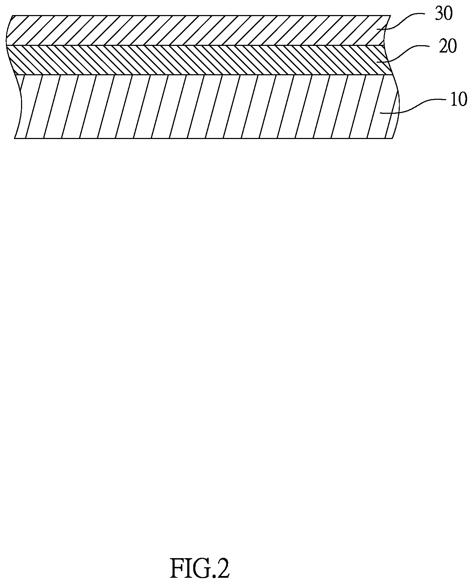

Referring to FIGS. 1 and 2, an elastic waterproof fabric in accordance with the present invention comprises an elastic cloth layer **10,** a polytetrafluoroethylene layer **20,** and an ethyl carbamate layer **30.**

The elastic cloth layer **10** comprises main yarn and elastic yarn. The main yarn is composed of Poly, Nylon, Poly+Cotton, Nylon+poly. The elastic yarn is composed of spandex or polytrimethylene terephthalate PTT+polyethylene terephthalate PET or polybutylene terephthalate PBT+polyethylene terephthalate PET or polypropylene terephthalate + cationic dyeable polybutylene terephthalate. The weight percentage of the elastic yarn in the elastic cloth layer **10** can be 5∼99% and the best range is 35∼85%.

The polytetrafluoroethylene layer **20** is disposed on one side of the elastic cloth layer **10** in a lamination manner, and the glue application method for lamination is to use dot glue or grid glue or whole surface glue, and the grid glue works best. The amount of glue used is 12~20g per square meter, and the best state is to use 10~15g per square meter to provide proper adhesion and maintain air permeability.

The ethyl carbamate layer **30** is disposed on one side of the polytetrafluoroethylene layer **20** in a lamination manner, so that the polytetrafluoroethylene layer **20** is sandwiched between the polyurethane ethyl carbamate layer **10** and the elastic cloth layer **10.** The glue application method for the lamination of the polyurethane ethyl carbamate layer **30** is to use dot glue, grid glue or whole surface glue, among which the effect of grid glue is the best. The amount of glue used is 12~20g per square meter, and the best state is to use 10~15g per square meter.

The glue used in the aforementioned lamination can be solvent-based or non-solvent-based. With the combination of the aforementioned structure, the elastic waterproof fabric of the present invention can use the elastic cloth layer **10** and the polyurethane ethyl carbamate layer **30** to sandwich the polytetrafluoroethylene layer **20,** so that the overall elastic waterproof fabric has an elongation rate of 5-20% and a recovery rate more than 70%.

## Claims

1. An elastic waterproof fabric, comprising:
an elastic cloth layer(10), said elastic cloth layer comprising a main yarn and an elastic yarn, said elastic yarn being selectively composed of spandex or polytrimethylene terephthalate PTT+polyethylene terephthalate PET or polybutylene terephthalate PBT+polyethylene terephthalate PET or polypropylene terephthalate + cationic dyeable polybutylene terephthalate;
a polytetrafluoroethylene layer (20) disposed on one side of said elastic cloth layer (10) in a lamination manner; and
ethyl carbamate layer (30) disposed on one side of said polytetrafluoroethylene layer **(20)** in a lamination manner, so that said polytetrafluoroethylene layer (20) is sandwiched between said polyurethane ethyl carbamate layer (30) and said elastic cloth layer (10).

2. The elastic waterproof fabric as claimed in claim 1, wherein the weight percentage of said elastic yarn in said elastic cloth layer (10) is 5∼99%.

3. The elastic waterproof fabric as claimed in claim 2, wherein the amount of glue used in the lamination is 12~20g per square meter.

4. The elastic waterproof fabric as claimed in claim 3, wherein the amount of glue used in the lamination is preferably 10~15g per square meter.

5. The elastic waterproof fabric as claimed in claim 3, wherein said main yarn is composed of Poly, Nylon, Poly+Cotton, Nylon+poly.

6. The elastic waterproof fabric as claimed in claim 4, wherein said main yarn is composed of Poly, Nylon, Poly+Cotton, Nylon+poly.

7. The elastic waterproof fabric as claimed in claim 6, wherein the elastic waterproof fabric has an elongation rate of 5-20% and a recovery rate more than 70%.
